# EUROPÄISCHE PATENTSCHRIFT

(11) **EP 2 475 543 B1**
(45) Veröffentlichungstag und Bekanntmachung des Hinweises auf die Patenterteilung: **31.12.2014**
(21) Anmeldenummer: 10754277.1
(22) Anmeldetag: 03.09.2010
(51) Int. Cl.: B60N 2/015, B60N 2/42, B60N 2/24, B64D 11/06, B63B 29/06

(54) **AN EINEM GURTGERÜST AUFGEHÄNGTER SICHERHEITSSITZ**
SAFETY SEAT SUSPENDED ON A BELT STRUCTURE
SIÈGE DE SÉCURITÉ SUSPENDU À UNE STRUCTURE DE SANGLES

(30) Priorität: 08.09.2009 DE 102009040472
(43) Veröffentlichungstag der Anmeldung: 18.07.2012
(73) Patentinhaber: AUTOFLUG GMBH, 25462 Rellingen (DE)
(72) Erfinder: EBEL, Wolfram, 33142 Buren (DE); HABERECHT, Andrè, 22549 Hamburg (DE)
(74) Vertreter: Müller, Karl-Ernst
(86) Internationale Anmeldenummer: PCT/EP2010/005421
(87) Internationale Veröffentlichungsnummer: WO 2011/029555

(56) Entgegenhaltungen:
- DE-B3-102007 019 348
- DE-B3-102008 005 422
- US-A- 3 868 143
- US-A1- 2007 170 742

## Beschreibung

Die Erfindung betrifft einen Sicherheitssitz für Land-, Luft- und Seefahrzeuge mit einem Sitzteil, welches an einem Gurtgerüst mit zwei jeweils im Bereich der hinteren Sitzteilkante verlaufenden, vertikalen und fahrzeugseitig festgelegten Haltegurten festgelegt ist, wobei die Haltegurte als eine zwischen in einem vertikalen Abstand zueinander oberhalb und unterhalb des Sitzteils angeordneten fahrzeugfesten Verankerungen aufgespannte Gurtschlinge mit einem dadurch gebildeten Vordergurt und einem Hintergurt ausgebildet ist.

Ein Sicherheitssitz mit den vorgenannten Merkmalen ist in der DE 10 2007 019 348 B3 beschrieben. Zur Befestigung des Sicherheitssitzes in einem Fahrzeug sind zwei nebeneinander in Sitzbreite angeordnete vertikale Haltegurte zwischen zwei beispielsweise im Dachbereich und im Bodenbereich des Fahrzeuges angeordneten Verankerungen aufgespannt. Hierzu ist jeder als Gurtschlinge ausgebildete Haltegurt mit seinen beiden Enden an beispielsweise der oberen Verankerung befestigt und durch die untere Verankerung geschlauft, sodass sich ein doppelter Verlauf des Haltegurtes mit einem dem Sitzteil zugewandten Vordergurt und einem entsprechend verlaufenden Hintergurt ergibt. Der Sitzteil des Sicherheitssitzes greift mit einer Querverstrebung in den Zwischenraum zwischen Vordergurt und Hintergurt, wobei die Querverstrebung jeweils in einer an dem Hintergurt angebrachten ortsfesten geschlossenen Festschlaufe festgelegt ist. Gleichzeitig ist der Sitzteil über schräg nach unterhalb des Sitzteils verlaufende und sich in jeweils einer an dem Hintergurt angebrachten weiteren Schlaufe fangende und darin abstützende Stützen abgestützt. Durch die Belastung des Sitzteils mit einer darauf sitzenden Person übt das Sitzteil gleichermaßen über die Stützen eine Druckkraft und über seine Querverstrebung eine Zugkraft auf die Haltegurte aus, sodass dadurch eine Festlegung des Sitzteils an dem unter Spannung gesetzten Gurtgerüst gegeben ist. Mit dem bekannten Sicherheitssitz ist der Nachteil verbunden, dass die Anbringung der jeweils mehreren Schlaufen an den Haltegurten aufwendig ist. Da die Schlaufen zudem entsprechend hoch belastet sind, sind an deren Befestigung an den Haltegurten entsprechend hohe Anforderungen gestellt. Auch ist die Ausbildung und die Auslegung des Sitzteils mit Querverstrebung und Stützen in Anpassung an das jeweils aufgespannte Haltegurtgerüst aufwendig.

Der Erfindung liegt daher die Aufgabe zugrunde, bei einem Sicherheitssitz der eingangs genannten Art dessen Befestigung an dem aufgespannten Gerüst zu vereinfachen.

Die Lösung dieser Aufgabe ergibt sich einschließlich vorteilhafter Ausgestaltungen und Weiterbildungen der Erfindungen aus dem Inhalt der Patentansprüche, welche dieser Beschreibung nachgestellt sind.

Die Erfindung sieht in ihrem Grundgedanken vor, dass das Sitzteil an einem zwei in der Verlaufsrichtung der vertikalen Haltegurte ausrichtete Streben aufweisenden Traggerüst befestigt ist, und dass zur Festlegung des Traggerüsts an dem Gurtgerüst der Vordergurt oder der Hintergurt der jeweiligen schlingenförmigen Haltegurte in jeweils einen zwischen dem Traggerüst und der oberhalb des Sitzteils gelegenen Verankerung und einen zwischen dem Traggerüst und der unterhalb des Sitzteils gelegenen Verankerung verlaufenden Haltegurtabschnitt geteilt ist, wobei die zugeordneten Enden der Haltegurtabschnitte an den vertikalen Streben des Traggerüsts gehaltert sind und dieses in seiner vertikalen Ausrichtung gespannt halten.

Mit der Erfindung ist zunächst der Vorteil verbunden, dass die Ausbildung des Sitzteils vereinfacht ist, soweit dieses an einem zwei vertikal ausgerichtete Streben aufweisenden Traggerüst befestigt wird. Erfindungsgemäß sind die Streben des Traggerüsts in den Verlauf des Gurtgerüstes eingeschaltet und darin derart eingebunden, dass weiterhin bei der Befestigung des Sicherheitssitzes im Fahrzeug auf jegliche feste Verbindungen zwischen der Fahrzeugstruktur und dem Sicherheitssitz verzichtet ist. Die Aufhängung des Sicherheitssitzes erfolgt somit ausschließlich über textile, also schock- und vibrationsdämpfende Materialien, sodass die Übertragung von auf das Fahrzeug einwirkenden Schocks, beispielsweise im Rahmen einer Minenansprengung, auf den Fahrzeugsitz reduziert ist. Mit dieser Einschaltung der vertikalen Streben des Traggerüsts in den Verlauf der zugeordneten Haltegurte und der direkten Anbindung der Haltegurte an die Enden der Streben des Traggerüsts ist die Aufhängung des Sicherheitssitzes an dem im übrigen textilen Gurtgerüst vereinfacht.

Nach einem Ausführungsbeispiel der Erfindung ist vorgesehen, dass die Streben des Traggerüsts an ihren Enden jeweils mit Ösen zur Festlegung der Enden von Haltegurten und/oder zugeordneten Haltegurtabschnitte daran versehen sind.

Nach einem Ausführungsbeispiel der Erfindung ist es zweckmäßig, wenn die Haltegurtabschnitte in den dem Sitzteil zugewandten Vordergurten der schlingenförmigen Haltegurte ausgebildet sind.

In einer aus der gattungsbildenden DE 10 2007 019348 B3 bekannten Weise ist vorgesehen, dass zur Aufbringung einer Vorspannung in den Verlauf der schlingenförmigen Haltegurte wenigstens eine Spannvorrichtung eingeschaltet ist.

In einer ersten Ausführungsform der Erfindung kann vorgesehen sein, dass die freien Enden jeder einen vertikalen Haltegurt bildenden Gurtschlinge an den Ösen der Streben des Traggerüsts befestigt und die fahrzeugseitigen Verankerungen als Umlenkösen ausbildet sind. Somit entspricht bei dieser Ausführungsform der Verlauf der beiden jeweils in den Seitenbereichen des Sitzteils angeordneten, als Gurtschlingen ausgebildeten Haltegurte dem in der gattungsbildenden DE 10 2007 019348 B3 beschriebenen Aufbau des Gurtgerüsts. Hierbei kann vorgesehen sein, dass die Spannvorrichtung unmittelbar in den Verlauf jeder Haltegurtschlinge eingeschaltet ist, vorzugsweise jeweils in den zwischen der unteren Öse der zugeordneten Strebe des Traggerüsts und der unterhalb des Sitzteils angeordneten fahrzeugfesten Verankerung verlaufenden Haltegurtabschnitt.

Gemäß einer alternativen Ausführungsform der Erfindung ist der Verlauf eines jeden schlingenförmigen Haltegurtes derart abgeändert, dass das zugeordnete Ende des zwischen der unteren Öse der zugeordneten Strebe des Traggerüsts und der unterhalb des Sitzteiles angeordneten Verankerung verlaufenden Haltegurtabschnitts nicht an der zugeordneten Öse der Strebe befestigt, sondern durch die Öse geführt, darin umgelenkt und zu einer zweiten unterhalb des Sitzteils angeordneten Verankerung geführt und daran befestigt ist. Insofern kann bei dieser Ausführungsform vorgesehen sein, dass die Spannvorrichtung jeweils in den zwischen der unteren Öse der Streben des Traggerüsts und der als Befestigung dienenden zweiten Verankerung verlaufenden Abschnitt jedes Haltegurtes eingeschaltet ist. Insgesamt sind somit die Befestigung jedes schlingenförmigen Haltegurtes und die Einschaltung der Spannvorrichtung darin erleichtert, zumal die zweite bodenseitige Verankerung an einer beliebigen geeigneten Stelle des Fahrzeugbodens angeordnet sein kann.

Gemäß einer wiederum alternativen Ausführungsform der Erfindung kann vorgesehen sein, dass die beiden vertikalen Haltegurtabschnitte Bestandteil eines einzigen umlaufenden Haltegurtes sind. Hierzu sind unterhalb des Sitzteils in gleicher Weise wie zu dem vorstehend erläuterten Ausführungsbeispiel benannt zwei im Abstand zueinander angeordnete bodenseitige Verankerungen vorgesehen, die dem Hindurchführen und jeweiligen Umlenken des einteiligen Haltegurtes dienen. Die Führung des Haltegurtes durch die Ösen der Streben des Traggerüsts und die fahrzeugseitigen Verankerungen vollzieht sich dabei der Gestalt, dass das eine Ende des Haltegurtes an der oberen Öse der einen Strebe des Traggerüstes befestigt, von hier aus zu der oberhalb des Sitzteils gelegenen Verankerung geführt und nach Umlenkung zu der ersten Verankerung der beiden unterhalb des Sitzteils angeordneten Verankerungen geführt und nach Umlenkung von hieraus zur unteren Öse der gleichen Strebe des Traggerüstes geführt und nach Umlenkung zur zweiten, unterhalb des Sitzteils angeordneten Verankerung geführt und nach Umlenkung zu der der anderen Strebe des Traggerüstes zugeordneten zweiten Verankerung und von hier aus über die untere Öse der anderen Strebe des Traggerüstes zu der ersten unterhalb des Sitzteils gelegenen Verankerung geführt und nach Umlenkung von hier aus zu der anderen oberhalb des Sitzteils zugeordneten Verankerung geführt und nach Umlenkung zur oberen Öse der anderen Strebe des Traggerüstes zurückgeführt und daran befestigt ist.

Bei dieser Ausführungsform kann vorgesehen sein, dass die Spannvorrichtung in den zwischen den beiden unterhalb des Sitzteils gelegenen, jeweils den Streben des Traggerüsts zugeordneten Verankerungen verlaufenden Gurtbandabschnitt eingeschaltet ist.

Gemäß einem Ausführungsbeispiel der Erfindung kann vorgesehen sein, dass das Traggerüst aus den beiden vertikalen Streben und aus wenigstens zwei im Winkel dazu angeordneten und mit den vertikalen Streben verbundenen Querstreben besteht. Hierbei kann vorgesehen sein, dass das Traggerüst aus Metall oder alternativ aus einem widerstandsfähigen Kunststoff besteht.

Der erfindungsgemäße Sicherheitssitz kann neben seinem Sitzteil auch eine Rückenlehne aufweisen, sodass an dem Traggerüst außer dem Sitzteil auch eine Rückenlehne befestigt sein kann.

In der Zeichnung ist ein Ausführungsbeispiel der Erfindung wiedergegeben, welches nachstehend beschrieben ist. Es zeigen:
- FIG.1: ein zur Festlegung des Sitzteils eines Sicherheitssitzes vorgesehenes Gurtgerüst mit einem einteiligen Haltegurt und einem darin eingeschalteten Traggerüst für das Sitzteil in einer schematischen Darstellung.
- FIG.2: dem Gegenstand der Figur 1 unter Einbeziehung des Sitzteils sowie einer Rückenlehne.

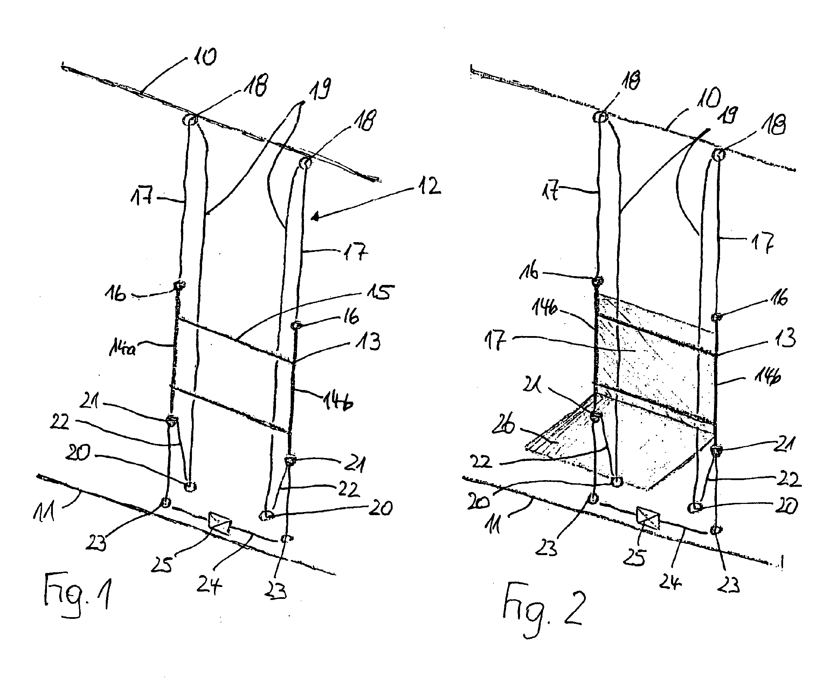

Gemäß Figur 1 ist mit 10 der Deckenbereich eines Fahrzeuges und mit 11 der Bodenbereich des Fahrzeuges bezeichnet, wobei zwischen dem Deckenbereich 10 und dem Bodenbereich 11 ein Gurtgerüst zur Festlegung eines Sicherheitssitzes daran aufgespannt ist. Dieses Gurtgerüst besteht bei dem dargestellten Ausführungsbeispiel aus einem einteiligen Haltegurt 12, in dessen im Einzelnen noch zu beschreibenden Verlauf ein Traggerüst 13 aus Metall oder einem geeigneten verstärkten Kunststoff eingeschaltet ist, wobei das Traggerüst 13 zur Befestigung zumindest eines Sitzteiles vorgesehen ist. Das Traggerüst 13 besteht aus zwei vertikal ausrichteten Streben 14a und 14b, die mittels Querstreben 15 miteinander verbunden sind. Das Traggerüst 13 ist in den Verlauf des durch den einteiligen Haltegurt 12 gebildeten Gerüsts derart eingeschaltet, dass eine vertikale Ausrichtung der Streben 14a, b und damit des Traggerüsts 13 gegeben ist. Zur Anbindung des Haltegurts 12 an den Streben 14a, b sind die Streben 14a, b an ihren oberen und unteren Enden jeweils mit Ösen 16 und 21 versehen.

Bei dem dargestellten Ausführungsbeispiel vollzieht sich die Führung des einteiligen Haltegurtes 12 zur Ausbildung des das Traggerüst 13 halternden Gurtgerüsts derart, dass ein Ende des einteiligen Haltegurtes 12 an der oberen Öse 16 einer vertikalen Strebe 14a befestigt ist. Von hier aus verläuft der Haltegurt 12 mit einem Gurtbandabschnitt 17 zu einer oberhalb des Traggerüsts 13 bzw. des davon betragenen Sitzteils 26 (Figur 2) angeordneten, im Deckenbereich 10 des Fahrzeuges befestigten Verankerung 18 und ist hier umgelenkt und zu einer gegenüberliegend am Fahrzeugboden 12 angebrachten ersten Verankerung 20 geführt. Hierdurch bildet der Gurtbandabschnitt 17 einen Vordergurt und der zwischen den Verankerungen 18 und 20 verlaufende Gurtbandabschnitt einen Hintergurt 19 aus. Der Haltegurt ist alsdann in der ersten bodenseitigen Verankerung 20 umgelenkt und mit einem Gurtbandabschnitt 22 in Richtung des Traggerüsts 13 geführt und in der unteren Öse 21 der ersten Strebe 14a umgelenkt und danach zu einer im Abstand zu der ersten bodenseitigen Verankerung 20 angeordneten zweiten bodenseitigen Verankerung 23 geführt.

In der zweiten Verankerung 23 ist der Haltegurt 12 wiederum umgelenkt und mit einem Gurtbandabschnitt 24 in Richtung der gegenüberliegenden Strebe 14b des Traggerüsts 13 geführt und hier in einer ebenfalls vorgesehenen zweiten bodenseitigen Verankerung 23 in Richtung des Traggerüsts 13 umgelenkt und mit einem Gurtbandabschnitt zur unteren Öse 21 der anderen Strebe 14b des Traggerüstes 13 hochgeführt. Nach Umlenkung in dieser Öse 21 ist der Haltegurt 12 wiederum zu der zugeordneten ersten bodenseitigen Verankerung 20 als Gurtbandabschnitt 22 zurückgeführt, hier umgelenkt und verläuft als zugeordneter Hintergurt 19 bis zu der zugeordneten oben Verankerung 18. Hier umgelenkt verläuft der Haltegurt mit einem entsprechenden Gurtbandabschnitt 17 wiederum zur oberen Öse 16 der anderen Querstrebe 14b und ist mit seinem Ende daran befestigt. Bei dem dargestellten Ausführungsbeispiel ist dabei in den zwischen den jeweils zweiten bodenseitigen Verankerungen 23 verlaufenden Gurtbandabschnitt 24 eine Spannvorrichtung 25 eingeschaltet, mittels der der einteilige und zwischen den fahrzeugseitigen Verankerungen aufgespannte Haltegurt 12 unter eine Vorspannung gesetzt werden kann, sodass das in den Verlauf des Haltegurtes 12 eingeschaltete Traggerüst 13 in dessen vertikaler Ausrichtung festgelegt ist.

Wie sich ergänzend aus Figur 2 ergibt, ist an dem Traggerüst 13 ein Sitzteil 26 wie auch eine Rückenlehne 27 befestigt.

Soweit in den Anmeldungsunterlagen auf einen vertikalen Verlauf oder eine vertikale Ausrichtung Bezug genommen ist, soll damit auch eine Abweichung von etwa bis zu 15 Grad von der zwischen Fahrzeugdach und Fahrzeugboden ausgerichteten Senkrechten erfasst sein, da die Sicherheitssitze in einem Fahrzeug in der Regel in einer leicht geneigten Anordnung festgelegt sind.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitssitz für Land- Luft- und Seefahrzeuge mit einem Sitzteil, welches an einem Gurtgerüst mit jeweils im Bereich der hinteren Sitzteilkante verlaufenden, vertikalen und fahrzeugseitig festgelegten Haltegurten festgelegt ist, wobei die Haltegurte als eine zwischen in einem vertikalen Abstand zueinander oberhalb und unterhalb des Sitzteils angeordneten fahrzeugfesten Verankerungen aufgespannte Gurtschlinge mit einem dadurch gebildeten Vordergurt und einem Hintergurt ausgebildet ist, **dadurch gekennzeichnet, dass** das Sitzteil (26) an einem zwei in der Verlaufsrichtung der vertikalen Haltegurte ausrichtete Streben (14a, b) aufweisenden Traggerüst (13) befestigt ist, und dass zur Festlegung des Traggerüsts (13) an dem Gurtgerüst der Vordergurt oder der Hintergurt der jeweiligen schlingenftirmigen Haltegurte in jeweils einen zwischen dem Traggerüst (13) und der oberhalb des Sitzteils (26) gelegenen Verankerung und einem zwischen dem Traggerüst und der unterhalb des Sitzteils gelegenen Verankerung (20) verlaufenden Haltegurtabschnitt (17, 22)geteilt ist, wobei die zugeordneten Enden der Haltegurtabschnitte (17, 22) an den vertikalen Streben (14a, b) des Traggerüsts (13) gehaltert sind und dieses in seiner vertikalen Ausrichtung gespannt halten.

2. Sicherheitssitz nach Anspruch 1, **dadurch gekennzeichnet, dass** die Streben (14a, b) des Traggerüsts (13) an ihren Enden jeweils mit Ösen (16, 21) zur Festlegung der Enden von Haltegurten und/oder zugeordneten Haltegurtabschnitten (17, 22) daran versehen sind.

3. Sicherheitssitz nach Anspruch 1 oder 2, **dadurch gekennzeichnet, dass** die Haltegurtabschnitte (17, 22) in den dem Sitzteil (26) zugewandten Vordergurten der schlingenförmigen Haltegurte ausgebildet sind.

4. Sicherheitssitz nach einem der Ansprüche 1 bis 3, **dadurch gekennzeichnet, dass** zur Aufbringung einer Vorspannung in den Verlauf der schlingenförmigen Haltegurte wenigstens eine Spannvorrichtung (25) eingeschaltet ist.

5. Sicherheitssitz nach einem der Ansprüche 1 bis 4, **dadurch gekennzeichnet, dass** die freien Enden jeder einen vertikalen Haltegurt bildenden Gurtschlinge an den Ösen (16, 21) der Streben (14a, b) des Traggerüsts (13) befestigt und die fahrzeugseitigen Verankerungen (18, 20) als Umlenkösen ausbildet sind.

6. Sicherheitssitz nach einem der Ansprüche 1 bis 4, **dadurch gekennzeichnet, dass** das eine Ende jeder einen vertikalen Haltegurt bildenden Gurtschlinge jeweils an der oberen Öse (16) der Streben (14a, b) des Traggerüsts (13)befestigt ist und der daran anschließende Haltegurtabschnitt (17) über die als Gurtumlenkung ausgebildete oberhalb des Sitzteils (26) angeordnete Verankerung (18) bis zu einer als Gurtumlenkung ausgebildeten, unterhalb des Sitzteils (26) angeordneten ersten Verankerung (20) geführt und von hieraus zur unteren Öse (21) der Streben (14a, b) des Traggerüsts (13) geführt und darin umgelenkt und zu einer zweiten, unterhalb des Sitzteils (26) angeordneten Verankerung (23) geführt und mit ihrem freien Ende daran befestigt ist.

7. Sicherheitssitz nach Anspruch 6, **dadurch gekennzeichnet, dass** die Spannvorrichtung (25) in den zwischen der unteren Öse (21) der Streben (14a, b) des Traggerüsts (13) und der als Befestigung dienenden zweiten Verankerung (23) verlaufenden Abschnitt jedes Haltegurtes eingeschaltet ist.

8. Sicherheitssitz nach einem der Ansprüche 1 bis 4, **dadurch gekennzeichnet, dass** die beiden vertikalen Haltegurtabschnitte (17, 22) zur Festlegung des Traggerüsts (13) Bestandteil eines einzigen umlaufenden Haltegurtes (12) sind und unterhalb des Sitzteils (26) jeder vertikalen Strebe (14a, b) des Traggerüsts (13) zwei im Abstand zueinander angeordnete Verankerungen (20, 23) zur Durchführung des Haltegurtes (12) zugeordnet sind, wobei das eine Ende des Haltegurtes (12) an der oberen Öse (16) der einen Strebe (14a) des Traggerüstes (13) befestigt, von hier aus zu der oberhalb des Sitzteils (26) gelegenen Verankerung (18) geführt und nach Umlenkung zu der ersten Verankerung (20) der beiden unterhalb des Sitzteils (26) angeordneten Verankerungen geführt und nach Umlenkung von hieraus zur unteren Öse (21) der gleichen Strebe (14a) des Traggerüstes (13) geführt und nach Umlenkung zur zweiten, unterhalb des Sitzteils (26) angeordneten Verankerung (23) geführt und nach Umlenkung zu der der anderen Strebe (14b) des Traggerüstes (13) zugeordneten zweiten Verankerung (23) und von hier aus über die untere Öse (21) der anderen Strebe (14b) des Traggerüstes (13) zu der ersten unterhalb des Sitzteils (26) gelegenen Verankerung (20) geführt und nach Umlenkung von hier aus zu der anderen oberhalb des Sitzteils (26) angeordneten Verankerung (18) geführt und nach Umlenkung zur oberen Öse (16) der anderen Strebe (14b) des Traggerüstes (13) zurückgeführt und daran befestigt ist.

9. Sicherheitssitz nach Anspruch 8, **dadurch gekennzeichnet, dass** die Spannvorrichtung (25) in den zwischen den beiden unterhalb des Sitzteils (26) gelegenen, jeweils den vertikalen Streben (14a, b) des Traggerüsts (13) zugeordneten zweiten Verankerungen (23) verlaufenden Gurtbandabschnitt (24) eingeschaltet ist.

10. Sicherheitssitz nach einem der Ansprüche 1 bis 9, **dadurch gekennzeichnet, dass** das Traggerüst (13) aus den beiden vertikalen Streben (14a, b) und aus wenigstens zwei im Winkel dazu angeordneten und mit den vertikalen Streben (14a, b) verbundenen Querstreben (15) besteht.

11. Sicherheitssitz nach Anspruch 10, **dadurch gekennzeichnet, dass** das Traggerüst (13) aus Metall besteht.

12. Sicherheitssitz nach Anspruch 10, **dadurch gekennzeichnet, dass** das Traggerüst (13) aus einem widerstandsfähigen Kunststoff besteht.

13. Sicherheitssitz nach einem der Ansprüche 10 bis 12, **dadurch gekennzeichnet, dass** an dem Traggerüst (13) neben dem Sitzteil (26) zusätzlich eine Rückenlehne (27) befestigt ist.

## Claims

1. Safety seat for land, air and sea vehicles, comprising a seat part, which is fastened to a belt frame having vertical retaining belts that each extend in the vicinity of the rear seat-part edge and are fastened to the vehicle, wherein the retaining belts are designed as a belt loop stretched between vehicle-mounted anchors arranged at a vertical distance to each other above and below the seat part, the belt loop having a front belt and a rear belt thus formed, **characterized in that** the seat part (26) is fastened to a support frame (13) having two braces (14a, b) oriented in the direction of extension of the vertical retaining belts, and that in order to fasten the support frame (13) to the belt frame, the front belt or the rear belt of the respective loop-shaped retaining belts is divided into two retaining belt sections (17, 22) extending between the support frame (13) and the anchor located above the seat part (26) and extending between the support frame and the anchor (20) located below the seat part, respectively, whereby the associated ends of the retaining belt sections (17, 22) are retained on the vertical braces (14a, b) of the support frame (13) and retaining the support frame under tension in its vertical orientation.

2. Safety seat according to claim 1, **characterized in that** the braces (14a, b) of the support frame (13) are provided at their ends with respective eyelets (16, 21) for the securement thereon of the ends of retaining belts and/or associated retaining belt sections (17, 22).

3. Safety seat according to claim 1 or 2, **characterized in that** the retaining belt sections (17, 22) are formed in the front belts of the loop-shaped retaining belts that face the seat part (26).

4. Safety seat according to one of the claims 1 or 3, **characterized in that** for application of a pretension into the run of the loop-shaped retaining belts, at least one tensioning device (25) is provided.

5. Safety seat according to one of the claims 1 to 4, **characterized in that** the free ends of each belt loop that forms a vertical retaining belt are secured to the eyelets (16, 21) of the braces (14a, b) of the support frame (13), and the vehicle-mounted anchors (18, 20) are embodied as guide or reversing eyelets,

6. Safety seat according to one of the claims 1 to 4, **characterized in that** one end of each belt loop that forms a vertical retaining belt is respectively secured to the upper eyelet (16) of the braces (14a, b) of the support frame (13), and the retaining belt section (17) that adjoins it is guided via the anchor (18) that is embodied as a belt direction reverser, and is disposed above the seat part (26), to a first anchor (20) embodied as a belt direction reverser, and disposed below the seat part, and from there is guided to the lower eyelet (21) of the braces (14a, b) of the support frame (13), where it undergoes a change in direction, and is guided to a second anchor (23) disposed below the seat part (26), and its free end is secured thereto.

7. Safety seat according to claim 6, **characterized in that** the tensioning device (25) is incorporated into that section of each retaining belt that extends between the lower eyelet (21) of the braces (14a, b) of the support frame (13) and the second anchor (23) that serves as a securement.

8. Safety seat according to one of the claims 1 to 4, **characterized in that** for the securement of the support frame (13), the two vertical retaining belt sections (17, 22) are part of a one-piece endless retaining belt (12), and below the seat part (26), associated with each vertical brace (14a, b) of the support frame (13) are two spaced apart anchors (20, 23) for the through-guidance of the retaining belt (12), whereby the one end of the retaining belt (12) is secured to the upper eyelet (16) of the one brace (14a) of the support frame (13), from here is guided to the anchor (18) disposed above the seat part (26), and after reversal of direction is guided to the first anchor (20) of the two anchors disposed below the seat part (26), and after reversal of direction, from there is guided to the lower eyelet (21) of the same brace (14a) of the support frame (13), and after change of direction is guided to the second anchor (23) disposed below the seat part (26), and after change of direction is guided to the second anchor (23) that is associated with the other brace (14b) of the support frame (13), and from here is guided via the lower eyelet (21) of the other brace (14b) of the support frame (13) to the first anchor (20) disposed below the seat part (26), and after reversal of direction is guided from here to the other anchor (18) disposed above the seat part (26), and after change of direction is guided back to the upper eyelet (16) of the other brace (14b) of the support frame (13) and is secured thereto.

9. Safety seat according to claims 8, **characterized in that** the tensioning device (25) is incorporated into the belt section (24) that extends between the two second anchors (23) that are disposed below the seat part (26) and are respectively associated with the vertical braces (14a, b) of the support frame (13).

10. Safety seat according to one of the claims 1 to 9, **characterized in that** the support frame (13) is comprised of the two vertical braces (14a, b) and from at least two crossbars (15) that are disposed at an angle thereto and are connected with the vertical braces (14a, b).

11. Safety seat according to 10, **characterized in that** the support frame (13) is made of metal

12. Safety seat according to claim 10,, **characterized in that** the support frame (13) is made of a robust polymeric material.

13. Safety seat according to one of the claims 10 to 12, **characterized in that** in addition to the seat part (26), additionally secured to the support frame (13) is a backrest.

## Revendications

1. Siège de sécurité pour des véhicules terrestres, aériens et maritimes, comprenant une partie siège, qui est fixée au niveau d'une structure de ceinture pourvue de ceintures de maintien s'étendant respectivement dans la zone de l'arête arrière de la partie siège, verticales et fixées côté véhicule, sachant que les ceintures de maintien sont réalisées sous la forme d'une boucle de ceinture, qui est tendue entre des ancrages solidaires du véhicule et disposés à une distance verticale donnée les uns des autres, au-dessus et en dessous de la partie siège et qui comprend une ceinture avant ainsi formée et une ceinture arrière, **caractérisé en ce que** la partie siège (26) est fixée au niveau d'une structure porteuse (13) présentant deux montants (14a, 14b) orientés dans le sens dans lequel les ceintures de maintien verticales s'étendent, et **en ce que** la ceinture avant ou la ceinture arrière des ceintures de maintien respectives présentant une forme de boucle sont divisées, aux fins de la fixation de la structure porteuse (13) au niveau de la structure de ceinture, en respectivement deux segments de ceinture de maintien (17, 22) s'étendant respectivement entre la structure porteuse (13) et l'ancrage situé au-dessus de la partie siège (26) et entre la structure porteuse et l'ancrage (20) situé en dessous de la partie siège, sachant que les extrémités associées des segments de ceinture de maintien (17, 22) sont maintenues au niveau des montants (14a, 14b) verticaux de la structure porteuse (13) et maintiennent cette dernière tendue dans son orientation verticale.

2. Siège de sécurité selon la revendication 1, **caractérisé en ce que** les montants (14a, 14b) de la structure porteuse (13) sont pourvus, au niveau de leurs extrémités, respectivement d'oeillets (16, 21) servant à fixer les extrémités de ceintures de maintien et/ou des segments de ceinture de maintien (17, 22) associés au niveau desdits montants.

3. Siège de sécurité selon la revendication 1 ou 2, **caractérisé en ce que** les segments de ceinture de maintien (17, 22) sont réalisés dans les ceintures avant, tournées vers la partie siège (26), des ceintures de maintien présentant une forme de boucle.

4. Siège de sécurité selon l'une quelconque des revendications 1 à 3, **caractérisé en ce qu'**au moins un dispositif de serrage (25) est intercalé afin d'appliquer une précontrainte le long des ceintures de maintien présentant une forme de boucle.

5. Siège de sécurité selon l'une quelconque des revendications 1 à 4, **caractérisé en ce que** les extrémités libres de chaque boucle de ceinture formant une ceinture de maintien verticale sont fixées au niveau des oeillets (16, 21) des montants (14a, 14b) de la structure porteuse (13), et **en ce que** les ancrages (18, 20) côté véhicule sont réalisés sous la forme d'oeillets de renvoi.

6. Siège de sécurité selon l'une quelconque des revendications 1 à 4, **caractérisé en ce que** l'une des extrémités de chaque boucle de ceinture formant une ceinture de maintien verticale est fixée respectivement au niveau de l'oeillet supérieur (16) des montants (14a, 14b) de la structure porteuse (13), et **en ce que** le segment de ceinture de maintien (17) s'y raccordant est guidé jusqu'à un premier ancrage (20) réalisé sous la forme d'un renvoi de ceinture, disposé en dessous de la partie siège (26) en passant par l'ancrage (18) réalisé sous la forme d'un renvoi de ceinture, disposé au-dessus de la partie siège (26) et, de là, est guidé en direction de l'oeillet inférieur (21) des montants (14a, 14b) de la structure porteuse (13), y est renvoyé et est guidé en direction d'un deuxième ancrage (23) disposé en dessous de la partie siège (26) et y est fixé par son extrémité libre.

7. Siège de sécurité selon la revendication 6, **caractérisé en ce que** le dispositif de serrage (25) est intercalé dans le segment de chaque ceinture de maintien, s'étendant entre l'oeillet inférieur (21) des montants (14a, 14b) de la structure porteuse (13) et le deuxième ancrage (23) faisant office de système de fixation.

8. Siège de sécurité selon l'une quelconque des revendications 1 à 4, **caractérisé en ce que** les deux segments de ceinture de maintien (17, 22) verticaux servant à la fixation de la structure porteuse (13) font partie intégrante d'une ceinture de maintien (12) unique en rotation, et **en ce que** deux ancrages (20, 23) disposés à distance l'un de l'autre sont associés, en vue du passage de la ceinture de maintien (12), en dessous de la partie siège (26), à chaque montant (14a, 14b) vertical de la structure porteuse (13), sachant qu'une extrémité de la ceinture de maintien (12) est fixée au niveau de l'oeillet supérieur (16) de l'un (14a) des montants de la structure porteuse (13), est guidée, de là, en direction de l'ancrage (18) situé au-dessus de la partie siège (26), et est guidée, une fois renvoyée, en direction du premier ancrage (20) des deux ancrages disposés en dessous de la partie siège (26), et est guidée, une fois renvoyée, de là, en direction de l'oeillet inférieur (21) du même montant (14a) de la structure porteuse (13), et est guidée, une fois renvoyée, en direction du deuxième ancrage (23) disposé en dessous de la partie siège (26), et est guidée, une fois renvoyée, en direction du deuxième ancrage (23) associé à l'autre montant (14b) de la structure porteuse (13), et, de là, est guidée, en passant par l'oeillet inférieur (21) de l'autre montant (14b) de la structure porteuse (13), en direction du premier ancrage (20) situé en dessous de la partie siège (26), et est guidée, une fois renvoyée, de là, en direction de l'autre ancrage (18) disposé au-dessus de la partie siège (26), et est ramenée, une fois renvoyée, en direction de l'oeillet supérieur (16) de l'autre montant (14b) de la structure porteuse (13) pour y être fixée.

9. Siège de sécurité selon la revendication 8, **caractérisé en ce que** le dispositif de serrage (25) est intercalé dans le segment de sangle de ceinture (24) s'étendant entre les deux deuxièmes ancrages (23) situés en dessous de la partie siège (26), associés respectivement aux montants (14a, 14b) verticaux de la structure porteuse (13).

10. Siège de sécurité selon l'une quelconque des revendications 1 à 9, **caractérisé en ce que** la structure porteuse (13) est constituée des deux montants (14a, 14b) verticaux et d'au moins deux montants transversaux (15) disposés, par rapport aux premiers montants, en angle et reliés aux montants (14a, 14b) verticaux.

11. Siège de sécurité selon la revendication 10, **caractérisé en ce que** la structure porteuse (13) est constituée de métal.

12. Siège de sécurité selon la revendication 10, **caractérisé en ce que** la structure porteuse (13) est constituée d'une matière plastique résistante.

13. Siège de sécurité selon l'une quelconque des revendications 10 à 12, **caractérisé en ce qu'**en complément un dossier (27) est fixé au niveau de la structure porteuse (13), à côté de la partie siège (26).
